Europäisches Patentamt

European Patent Office

Office européen des brevets

(11) Publication number: **0 433 461 A1**

## EUROPEAN PATENT APPLICATION
### published in accordance with Art. 158(3) EPC

(21) Application number: 90908680.3

(22) Date of filing: 04.06.90

(86) International application number:
PCT/JP90/00721

(87) International publication number:
WO 90/16020 (27.12.90 90/29)

(51) Int. Cl.⁵: **G05B 13/04**

(30) Priority: 15.06.89 JP 150482/89

(43) Date of publication of application:
26.06.91 Bulletin 91/26

(84) Designated Contracting States:
DE FR GB

(71) Applicant: **FANUC LTD.**
**3580, Shibokusa Aza-Komanba, Oshino-mura**
**Minamitsuru-gun, Yamanashi 401-05(JP)**

(72) Inventor: **TORII, Nobutoshi**
**Room 308 Fuyohaitsu 65-4, Takakura-cho**
**Hachioji-shi Tokyo 192(JP)**
Inventor: **NIHEI, Ryo Room 7-201 Fanuc**
**Manshonharimomi**
**3539, Shibokusa Oshino-mura**
**Minamitsuru-gun**

**Yamanashi 401-05(JP)**
Inventor: **KATO, Tetsuaki Room 8-101 Fanuc**
**Manshonharimomi**
**3511-1, Shibokusa Oshino-mura**
**Minamitsuru-gun**
**Yamanashi 401-05(JP)**
Inventor: **ARITA, Soichi Fanuc Dai-3**
**Vira-karamatsu**
**3527-1, Shibokusa Oshino-mura**
**Minamitsuru-gun**
**Yamanashi 401-05(JP)**

(74) Representative: **Billington, Lawrence Emlyn et al**
**Haseltine Lake & Co Hazlitt House 28,**
**Southampton Buildings Chancery Lane**
**London WC2A 1AT(GB)**

(54) ZEROING METHOD USING A DISTURBANCE ESTIMATING OBSERVER.

(57) A zeroing method which prevents transient characteristics of a control system from being deteriorated by the provision of the observer while exhibiting the effect of removing disturbance caused by the disturbance estimating observer. Based on a practical current instruction (I-y') and a practical motor speed (v), the disturbance (x) is estimated by the disturbance estimating observer (5) equipped with four transfer elements (51 to 54) that have transfer functions (Kt/Jm, K1, K2/S, 1/S) determined by those corresponding to a torque constant (Kt) of the motor, an inertia (Jm) of the system, and parameters (K1, K2). When the positional deviation is small, an estimated disturbance is adjusted by multiplying the estimated disturbance by a feedback gain of a value "1" by a gain adjusting means (4), and the adjusted quantity (y') is subtracted from the current instruction (I) to remove static frictional disturbance. When the positional deviation is great, the estimated disturbance is multiplied by a feedback gain of a value "0" to inhibit operation of the observer, and therefore transient characteristics of the control system are prevented from being deteriorated by the operation of the observer.

## ZEROING METHOD USING A DISTURBANCE ESTIMATION OBSERVER

Technical Field

The present invention relates to a zeroing method using a disturbance estimation observer, and more particularly, to a zeroing method capable of preventing transient characteristics of a control system from being degraded due to provision of an observer.

Background Art

In order to eliminate an adverse affection of a disturbance applied to a control system, it is conventionally known to perform zeroing control (zeroing) based on an estimated disturbance which is determined by means of an observer. According to the zeroing method, it is possible to considerably accurately estimate a disturbance (low-frequency disturbance or direct-current-like disturbance) whose acting direction does not substantially change with elapse of time, whereby a disturbance of this kind can be suitably eliminated. For instance, by applying the zeroing method to a control system for controlling a servomotor for driving a robot joint, it is possible to prevent a delay in motor rotation due to static friction force acting, e.g., between sliding surfaces of the joint at start of the motor, and prevent accompanying rapid motor rotation from occurring immediately after the start of motor rotation. This makes it possible to rotate the motor smoothly. When the disturbance estimation observer is provided, however, transient characteristics of the motor can be sometimes degraded. For instance, vibration can occur upon accelerated or decelerated operation of the motor.

Disclosure of the Invention

The object of the present invention is to provide a zeroing method capable of preventing transient characteristics of a control system from being degraded due to provision of a disturbance estimation observer, while enjoying the ability of the observer to eliminate a disturbance.

In order to achieve the aforementioned object, a zeroing method of the present invention comprises steps of: detecting a value of a speed parameter of a control system; operating the control system in accordance with an output of a disturbance estimation observer; and reducing that component of an observer output which contributes to control, with an increase of the detected speed parameter value.

According to the present invention, as described above, since the control system is operated in accordance with the output from the disturbance estimation observer, the disturbance applied to the control system can be estimated and removed appropriately. In addition, since the observer output component which contributes to the control is increased with decrease of the speed parameter value of the control system, it is possible to fully achieve the ability of the observer to eliminate the disturbance, which ability is particularly useful to eliminate a low frequency disturbance. Further, since the observer output component which contributes to the control is decreased with increase of the speed parameter value, it is possible to prevent degradation of transient characteristics, which occurs attributable to the provision of the observer.

Brief Description of the Drawings

Fig. 1 is a block diagram of a servo system showing the principle of operation of the present invention;

Fig. 2 is a schematic block diagram showing the principal part of a robot to which is applied a zeroing method according to one embodiment of the present invention; and

Fig. 3 is view showing an example of the setting of a feedback gain for a disturbance elimination process; and

Fig. 4 is a flowchart showing speed control processing executed by a processor of a servo circuit shown in Fig. 2.

Best Mode of Carrying Out the Invention

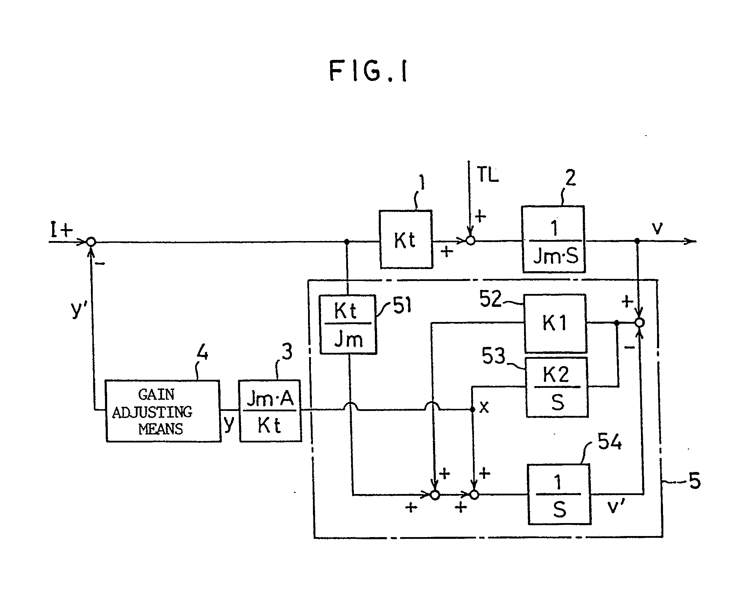

Referring to Fig. 1, in a servo control system to which the present invention is applied, an estimated disturbance y' after a gain adjustment (mentioned later) is subtracted from a current command (torque command) I delivered from a servo circuit (not shown), to thereby determine an actual current command I - y', which is converted into an actual motor speed v by means of transfer elements 1 and 2 associated with the servomotor (not shown). Symbols Kt and TL represent a torque constant of the servomotor and a disturbance torque, respectively, and Jm represents the total inertia of a system which includes a load, e.g.,

a robot driven by the servomotor. A disturbance estimation observer 5 of the control system includes transfer elements 51 to 54 whose transfer functions are Kt/Jm, K1, K2 and 1/S, respectively, and is designed to be compatible for robot operating conditions where equations (1) and (2) are fulfilled.

$$dTL/dt = 0 \quad (1)$$

$$dv/dt = (I \cdot Kt/Jm) + (TL/Jm) \quad (2)$$

In the disturbance estimation observer 5, the sum of an output from the transfer element 51, which receives the actual current command I - y', an output from the transfer element 52, and an output x from the transfer element 53 is applied to the transfer element 54. The result of subtraction of an output (estimated motor speed) v' of the transfer element 54 from the actual motor speed v is applied to each of the transfer elements 52 and 53. Further, in the transfer element 3, the output x of the transfer element 53 is multiplied by a value of Jm · A/Kt to determine an estimated disturbance y. Then, in a gain adjusting means 4, the estimated disturbance y is multiplied by a feedback gain which is variably set in dependence on the motor speed in a range varying from the minimum value of "0" to the maximum value of "1", to thereby derive the gain-adjusted estimated disturbance y'. In the drawing, symbol A denotes a conversion constant to match system of units.

As apparent from Fig. 1, the actual motor speed v and the estimated motor speed v' are respectively represented by equations (3) and (4).

$$v = \{(I - y') \cdot Kt + TL\} \cdot (1/Jm \cdot S) \quad (3)$$

$$v' = \{(I - y') \cdot (Kt/Jm) + (v - v') \cdot K1 + (v - v') \cdot (K2/S)\} \cdot (1/S) \quad (4)$$

From equations (3) and (4), we obtain equation (5) as follows:

$$v - v' = (TL/Jm) \cdot [1/\{S + K1 + (K2/S)\}] \quad (5)$$

Accordingly, the output x of the transfer element 53 is given by the following equation (6).

$$x = (v - v') \cdot (K2/S) = (TL/Jm) \cdot [K2/\{S^2 + K1 \cdot S + K2\}] \quad (6)$$

Here if the values of transfer function parameters K1 and K2 are so selected that the poles are stabilized, the output (estimated disturbance before gain adjustment) x of the transfer element 53 takes a value proportional to the disturbance torque TL, as shown in equation (7).

$$x \rightleftharpoons TL/Jm = TL'/Jm \quad (7)$$

In this case, the output (estimated disturbance) y of the transfer element 3 and an output Kt · (I - y') of the transfer element 1 are given by equations (8) and (9), respectively.

$$y = x \cdot Jm \cdot A/Kt = TL' \cdot A/Kt \quad (8)$$

$$Kt \cdot (I - y') = Kt \cdot (I - TL' \cdot A \cdot B/Kt) = Kt \cdot I - TL' \cdot A \cdot B \quad (9)$$

where symbol B indicates a feedback gain which is variably set in the gain adjusting means 4.

After all, the sum of the output Kt · (I - y') of the transfer element 1 and the disturbance torque TL takes a value approximate to the value Kt · I when the feedback gain B representative of that component of the estimated disturbance y which contributes to the control is set to the maximum value "1". Thus, the disturbance is removed. Further, the feedback gain B is reduced from the maximum value "1" to the minimum value "0" with the increase of the motor speed, whereby degradation of transient characteristics of the control system, attributable to the operation of the disturbance estimation observer 5, can be avoided.

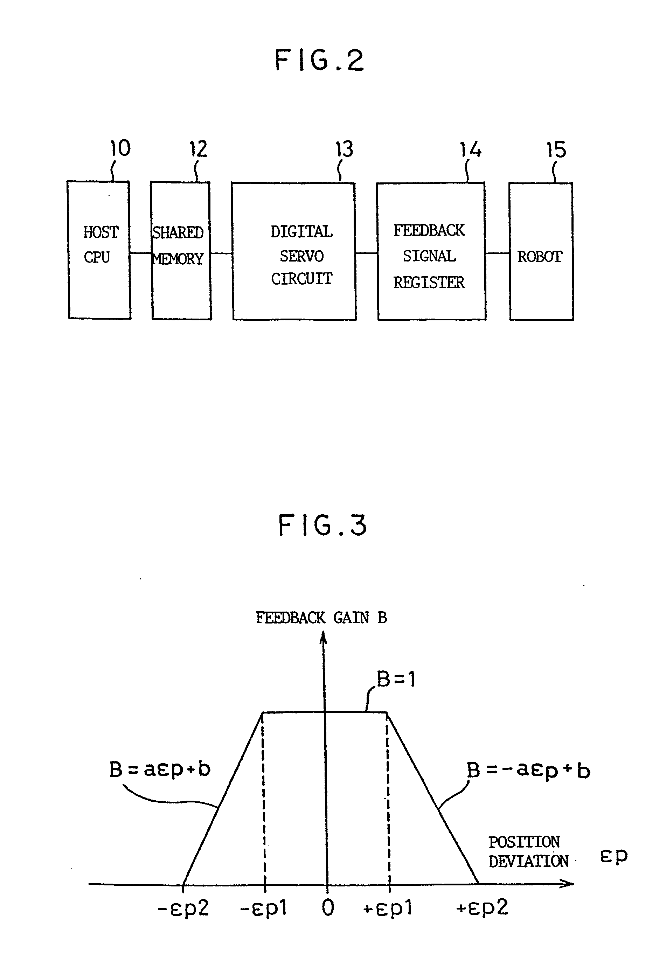

Referring now to Fig. 2, the robot for embodying a zeroing method according to one embodiment of the present invention will be described.

The robot comprises a robot mechanism section 15, and a numerical control unit for controlling the drive of servomotors (not shown) for individual axes of the mechanism section. The robot mechanism section 15 is provided with various sensors (not shown) for detecting the rotational positions, rotational speeds, and driving currents of the servomotors for the individual axes. The numerical control unit comprises a host computer 10 for generating move commands for the individual robot axes, a digital servo circuit 13 including a digital signal processor, and a shared memory 12 interposed between the elements 10 and 13 and accessible from both the elements. More specifically, the servo circuit 13 is arranged to execute position, speed and current loop processing. Namely, the servo circuit 13 is operable to derive a position deviation in accordance with a move command from the host computer 10 and a position feedback signal from a position sensor, derive a deviation (speed deviation) between a velocity command corresponding to the position deviation and a speed feedback signal supplied from a speed sensor, and determine a current command (torque command) corresponding to the speed deviation. Further, the servo circuit 13 is arranged to execute processing to achieve the functions of the disturbance estimation observer 5, transfer element 3, and gain adjusting means shown in Fig. 1. The numerical control unit further comprises feedback signal registers (one of which is shown by reference numeral 14) for storing therein position, speed and current feedback signals supplied from various sensors for the individual servomotor.

Prior to an actual operation of the robot, an operator preferably experimentally determines data for determination of the feedback gain B. In the present embodiment, to determine a value of the feedback gain B in a manner depending on the position deviation amount, as shown in Fig. 3, the operator determines a first position deviation amount $\epsilon p1$ (>0) indicative of a motor speed region where a large static frictional force is produced, and a second position deviation amount $\epsilon p2$ (>0) indicative of a motor speed region where transient characteristics are degraded. For instance, a position deviation amount, generated when that motor speed is reached at which a phenomenon, e.g., a rapid increase of the motor rotational speed, representative of decrease of the static frictional force, initially occurs after the start of forward motor rotation, is determined as the value $\epsilon p1$. Further, a position deviation amount, generated when that motor speed is reached at which a phenomenon, e.g., vibration, representative of degraded transient characteristics of the servo system, initially occurs during an accelerated motor operation under the control of numerical control unit while the current command I is corrected in accordance with the observer output (estimated disturbance y'), with the feedback gain B set at the value "1", is determined as the value $\epsilon p2$.

Next, the operator operates a manual data input device (not shown) of the numerical control unit, so that a feedback gain arithmetic equation represented by equation (10) is input into the numerical control unit.

$$B = \begin{cases} 1 & (\text{if } |\varepsilon p| \leqq \varepsilon 1) \\ a \cdot \varepsilon p + b & (\text{if } -\varepsilon p2 < \varepsilon p < -\varepsilon p1) \\ -a \cdot \varepsilon p + b & (\text{if } \varepsilon p1 < \varepsilon p < -\varepsilon p2) \\ 0 & (\text{if } |\varepsilon p| \geqq \varepsilon p2) \end{cases}$$

$$--- \quad (10)$$

where $a = 1/(\epsilon p2 - \epsilon p1)$ and $b = \epsilon p2/(\epsilon p2 - \epsilon p1)$

In response to the manual data input, the host computer 10 of the numerical control unit causes the shared memory 12 to store equation (10).

During an actual robot operation, the processor of the servo circuit 13 sequentially executes position loop processing and its minor loops, i.e., speed loop processing and current loop processing in the order mentioned above, and periodically executes this series of processing. In the embodiment, proportional control is effected in the position loop processing, and proportional-plus-integral control or integral-plus-proportional control is effected in the speed loop processing.

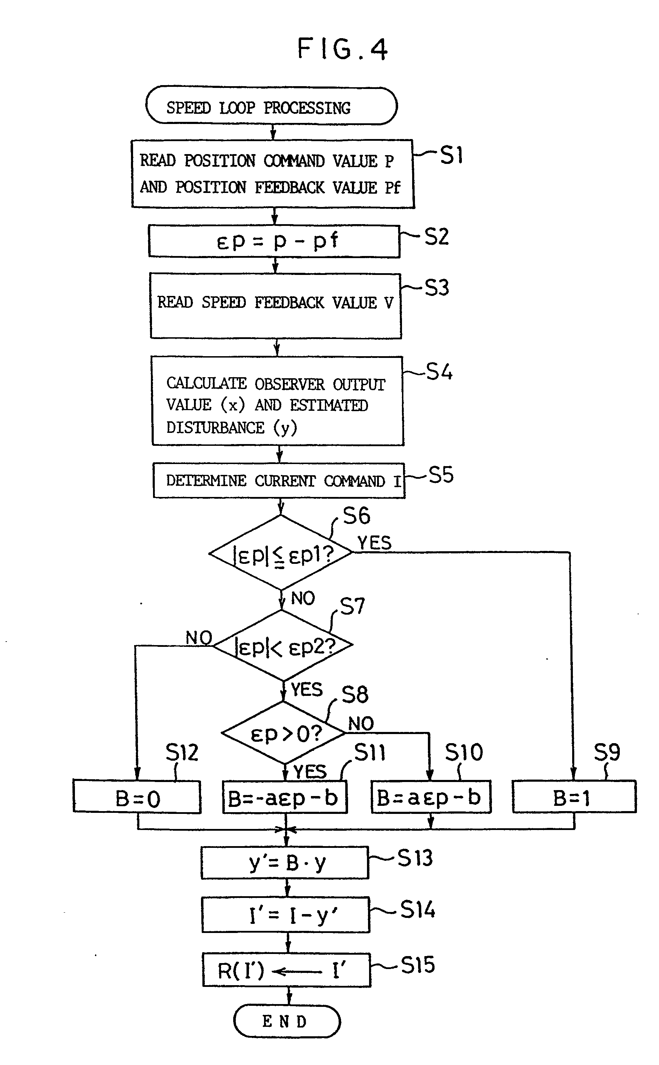

As shown in Fig. 4, in each of speed loop processing cycles, the processor reads out, from the shared memory 12, a position command value P written into the memory 12 by the host computer 10, reads out a position feedback value Pf, indicative of an actual motor position, from the feedback signal register 14 (step S1), and subtracts the value Pf from the value P to determine the position deviation $\epsilon$ p therebetween (step S2). Then, the processor reads out a speed feedback value V, indicative of an actual motor speed, from the feedback signal register 14 (step S3). Next, the processor serving as the disturbance estimation observer 5 shown in Fig. 1 reads out, from a register R(I') accommodated in the servo circuit 13, a corrected current command value I' calculated at step S15 (mentioned later) in the preceding cycle and stored in the just-mentioned register, and calculates a value which corresponds to the observer output x shown in Fig. 1 on the basis of the current command value I' and the speed feedback value V. Then, the processor serving as the transfer element 3 shown in Fig. 1 multiplies the observer output value x by the parameter Jm $\bullet$ A/Kt to calculate an estimated disturbance y (step S4). Further, the processor executes ordinary speed loop processing based on the speed command determined in the position loop processing immediately before the speed loop processing, to thereby produce a current command I (step S5).

Next, the processor determines whether or not the absolute value | $\epsilon$ p | of the position deviation derived in step S2 is equal to or less than the first position deviation amount $\epsilon$ p1 (step S6). If the absolute value | $\epsilon$ p | is equal to or less than the value $\epsilon$ p1, the processor sets the feedback gain B to a value "1" in accordance with the arithmetic equation B = 1 (step S9). On the other hand, if it is determined at step S6 that the absolute value | $\epsilon$ p | of the position deviation is larger than the value $\epsilon$ pl, the processor determines whether or not the absolute value | $\epsilon$ p | is less than the second position deviation amount $\epsilon$ p2 (step S7). If the determination result is affirmative, the processor further determines whether the position deviation $\epsilon$ p is positive or not (step S8). When it is determined at step S8 that the position deviation $\epsilon$ p is negative (-$\epsilon$ p2<$\epsilon$ p<$\epsilon$ p1), the processor decides the value of the feedback gain B in accordance with the arithmetic equation B = a $\bullet$ $\epsilon$p + b(step S10). When it is determined at step S8 that the position deviation $\epsilon$ p is positive ($\epsilon$ p1<$\epsilon$ p<$\epsilon$ p2), the processor decides the value of the feedback gain B in accordance with the arithmetic equation B = - a $\bullet$ $\epsilon$ p + b(step S11). Further, if it is determined that the absolute value | $\epsilon$ p | of the position deviation is equal to or larger than the. second position deviation amount $\epsilon$ p2, the value of the feedback gain B is set to "0" in accordance with the arithmetic equation B = 0 (step S12).

After completion of the calculation of the feedback gain B in a corresponding one of steps S9 to S11, the processor serving as the gain adjusting means 4 shown in Fig. 1 multiplies the estimated disturbance y determined at step S4 by the value of the feedback gain B, to thereby calculate a gain-adjusted estimated disturbance y' (S13). Whereupon, the processor subtracts the estimated disturbance y' from the current command I determined at step S5 to derive a corrected current command I' (step S14), and causes this value I' to be stored in the register R(I') for the calculation of the estimated disturbance in the next cycle (step S15), whereby the speed loop processing is completed. Next, the processor enters the current loop processing based on the corrected current command I'.

As mentioned above, when the absolute value | $\epsilon$ p | of the position deviation is equal to or less than the first position deviation amount $\epsilon$ p1, the value of the feedback gain B is set to "1", to thereby permit the observer 5 to fully exhibit its ability of eliminating the disturbance. As a consequence, a large static frictional disturbance is removed appropriately, which is produced at the start of the motor at which the motor speed is zero and immediately after the start of the motor at which the motor speed is extremely small. On the other hand, when the absolute value | $\epsilon$ p | of the position deviation is equal to or larger than the second position deviation amount $\epsilon$ p2, the value of the feedback gain B is set to "0", so that the observer 5 is rendered to be substantially inoperative. As a result, degraded transient characteristics of the control system can be avoided, which would be otherwise caused when the observer 5 is operated in a high motor speed region. This makes it possible to prevent inconvenience such as occurrence of vibration. In addition, the value of the feedback gain B linearly smoothly changes from "1" to "0" or from "0" to "1" in the rotational region varying between an upper limit rotation rate in a low speed region and a lower limit rotation rate in a high speed region. Thus, control stability never be degraded.

The present invention is not limited to the foregoing embodiment, and various modifications thereof may be made.

For instance, although the feedback gain B associated with the observer output is variably set in dependence on the position deviation $\epsilon$ p in the embodiment wherein proportional control is effected in the position loop processing, the feedback gain may be set in dependence on the actual motor speed (speed feedback value) or the speed command calculated in the position loop processing. In the embodiment, the position deviation is calculated in the speed loop processing in accordance with the position command and the position feedback value. Alternatively, the position deviation calculated in the position loop processing may be employed.

## Claims

1. A zeroing method using a disturbance estimation observer, comprising steps of:
detecting a value of a speed parameter of a control system;
operating the control system in accordance with an output of a disturbance estimation observer; and
reducing that component of an observer output which contributes to control, with an increase of the
detected speed parameter value.

2. A zeroing method using a disturbance estimation observer according to claim 1, wherein said method is
applied to that control system which is arranged to execute position, speed, and current loop
processing, and a current command generated in the speed loop processing is corrected by the
observer output.

3. A zeroing method using a disturbance estimation observer according to claim 1, further including steps
of:
setting beforehand a first speed parameter region and a second speed parameter region in which an
absolute value of the speed parameter is larger than that in the first speed parameter region,
respectively;
setting a feedback gain, which determines the observer output component which contributes to control,
to a first predetermined value when a detected speed parameter value falls within the first speed
parameter region; and
setting the feedback gain to a second predetermined value, which is less than the first predetermined
value, when the detected speed parameter value falls within the second speed parameter region.

4. A zeroing method using a disturbance estimation observer according to claim 3, further including steps
of:
setting beforehand a third speed parameter region in which the absolute value of the speed parameter
is larger than that in the first speed parameter region and is smaller than that in the second speed
parameter region; and
linearly decreasing the feedback gain from the first predetermined value to the second predetermined
value, with an increase of the absolute value of the speed parameter, when the detected speed
parameter value falls within the third speed parameter region.

5. A zeroing method using a disturbance estimation observer according to claim 3, wherein the first speed
parameter region and the first predetermined value of the feedback gain are respectively set to ones
suitable for elimination of a particular disturbance.

6. A zeroing method using a disturbance estimation observer according to claim 5, wherein the second
speed parameter region and the second predetermined value of the feedback gain are respectively set
in such a manner that the disturbance estimation observer is rendered to be substantially inoperative
when transient characteristics of the control system can be degraded.

7. A zeroing method using a disturbance estimation observer according to claim 5, wherein the particular
disturbance is a static frictional disturbance.

8. A zeroing method using a disturbance estimation observer according to claim 6, wherein the second
predetermined value of the feedback gain is set to zero.

9. A zeroing method using a disturbance estimation observer according to claim 1, wherein the speed
parameter is a position deviation.

10. A zeroing method using a disturbance estimation observer according to claim 1, wherein the speed
parameter is an actual motor speed.

# F I G . I

# FIG.2

```
  10        12          13            14           15
HOST     SHARED     DIGITAL      FEEDBACK
CPU      MEMORY     SERVO        SIGNAL        ROBOT
                    CIRCUIT      REGISTER
```

# FIG.3

FEEDBACK GAIN B

B=1

$B = a\varepsilon p + b$

$B = -a\varepsilon p + b$

POSITION
DEVIATION $\varepsilon p$

$-\varepsilon p2$ $\quad -\varepsilon p1 \quad$ 0 $\quad +\varepsilon p1 \quad +\varepsilon p2$

# FIG.4

```
       ┌─────────────────────────┐
       │  SPEED LOOP PROCESSING   │
       └─────────────────────────┘
                    │
       ┌─────────────────────────────────┐
       │ READ POSITION COMMAND VALUE P    │── S1
       │ AND POSITION FEEDBACK VALUE Pf   │
       └─────────────────────────────────┘
                    │
       ┌─────────────────────────────────┐
       │        εp = p - pf               │── S2
       └─────────────────────────────────┘
                    │
       ┌─────────────────────────────────┐
       │   READ SPEED FEEDBACK VALUE V    │── S3
       └─────────────────────────────────┘
                    │
       ┌─────────────────────────────────┐
       │ CALCULATE OBSERVER OUTPUT        │── S4
       │ VALUE (x) AND ESTIMATED          │
       │ DISTURBANCE (y)                  │
       └─────────────────────────────────┘
                    │
       ┌─────────────────────────────────┐
       │ DETERMINE CURRENT COMMAND I      │── S5
       └─────────────────────────────────┘
```

- S6: $|εp| \leqq εp1?$ — YES → S9
- NO ↓
- S7: $|εp| < εp2?$ — NO → S12
- YES ↓
- S8: $εp > 0?$ — NO → S10; YES → S11
- S12: $B = 0$
- S11: $B = -aεp - b$
- S10: $B = aεp - b$
- S9: $B = 1$
- S13: $y' = B \cdot y$
- S14: $I' = I - y'$
- S15: $R(I') \leftarrow I'$
- END

# INTERNATIONAL SEARCH REPORT

International Application No  PCT/JP90/00721

**I. CLASSIFICATION OF SUBJECT MATTER** (if several classification symbols apply, indicate all) ⁶

According to International Patent Classification (IPC) or to both National Classification and IPC

Int. Cl⁵  G05B13/04

**II. FIELDS SEARCHED**

| Minimum Documentation Searched ⁷ | |
|---|---|
| Classification System | Classification Symbols |
| IPC | G05B13/00-13/04 |

| Documentation Searched other than Minimum Documentation to the Extent that such Documents are Included in the Fields Searched ⁸ |
|---|
| Jitsuyo Shinan Koho               1926 - 1990 |
| Kokai Jitsuyo Shinan Koho        1971 - 1990 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| A | JP, A, 63-16982 (Hitachi, Ltd.), 23 January 1988 (23. 01. 88), (Family: none) | 1 - 10 |

---

\* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 20, 1990 (20. 01. 90) | October 8, 1990 (08. 10. 90) |
| International Searching Authority | Signature of Authorized Officer |
| Japanese Patent Office | |

Form PCT/ISA/210 (second sheet) (January 1985)